# EUROPÄISCHE PATENTSCHRIFT

(11) **EP 1 060 315 B1**
(45) Veröffentlichungstag und Bekanntmachung des Hinweises auf die Patenterteilung: **26.11.2003**
(21) Anmeldenummer: 98966670.6
(22) Anmeldetag: 23.12.1998
(51) Int. Cl.: E05C 3/04, H02B 1/38

(54) **SCHALTSCHRANK MIT EINEM SCHRANKKORPUS UND MIT GEGEN-SCHRANKTÜR UND SCHLIESS-SCHRANKTÜR**
CONTROL CABINET WITH A CABINET BODY, AN INNER DOOR AND A CLOSING DOOR
ARMOIRE DE COMMANDE COMPORTANT UN CORPS D'ARMOIRE, UNE CONTRE-PORTE ET UNE PORTE DE FERMETURE

(30) Priorität: 13.02.1998 DE 19806064
(43) Veröffentlichungstag der Anmeldung: 20.12.2000
(73) Patentinhaber: Rittal-Werk Rudolf Loh GmbH & Co. KG, 35745 Herborn (DE)
(72) Erfinder: REUTER, Wolfgang, D-57299 Burbach (DE); KÖHLER, Martina, D-35745 Herborn (DE); ROOT, Paul, D-35080 Bad Endbach (DE)
(74) Vertreter: Fleck, Hermann-Josef, Dr.-Ing.
(86) Internationale Anmeldenummer: EP9808434
(87) Internationale Veröffentlichungsnummer: WO99041478

(56) Entgegenhaltungen:
- GB-A- 414 490
- GB-A- 2 305 960

## Beschreibung

Die Erfindung betrifft einen Schaltschrank mit einem Schrankkorpus, dessen offene Vorderseite mittels einer Gegen-Schranktür und einer eine Verschlußeinrichtung tragenden Schließ-Schranktür nacheinander verschließbar ist, wobei die Gegen-Schranktür unten und oben mittels eines zweiarmigen Verriegelungshebels am Schrankkorpus und die Schließ-Schranktür mittels eines Stangenverschlusses am Schrankkorpus festlegbar sind und wobei die Schließ-Schranktür im Schließbereich die Gegen-Schranktür teilweise überlappt.

Bei derartigen Schaltschränken wird beim Schließen der Vorderseite zuerst die Gegen-Schranktür am Schrankkorpus mit den Verriegelungshebeln festgelegt und dann mit der Schließ-Schranktür vollständig verschlossen. Beim Öffnen wird zuerst die Schließ-Schranktür geöffnet und dann die Gegen-Schranktür entriegelt. Dabei stehen je nach Ausführung der Verriegelungshebel diese mit den Schließarmen oder den Betätigungsarmen an der freien vertikalen Kante der Gegen-Schranktür vor, was eine Gefahrenstelle darstellt. Außerdem sind vielfach die Betätigungsarme der Verriegelungshebel schlecht zu fassen und die Verriegelung bzw. Entriegelung der Gegen-Schranktür nur mühsam vorzunehmen.

Es ist Aufgabe der Erfindung, bei einem Schaltschrank der eingangs erwähnten Art die durch die Verriegelungshebel verursachten Gefahrenstellen zu vermeiden und den Verriegelungs- und Entriegelungsvorgang der Gegen-Schranktür zu erleichtern.

Diese Aufgabe wird nach der Erfindung dadurch gelöst, daß die Gegen-Schranktür im Schließbereich dreifach abgekantet ist und eine nach außen offene nutartige Aufnahme bildet, daß die Verriegelungshebel spiegelbildlich ausgebildet und auf der dem Schrankinnenraum zugekehrten Innenseite des parallel zur Ebene der Gegen-Schranktür ausgerichteten Abkantabschnittes der Aufnahme drehbar und abgefedert gelagert sind, daß im Schließbereich unten und oben U-förmig abstehende, nach außen offene Anschlagkörper angebracht sind, in die die Abkantabschnitte der Gegen-Schranktür einführbar sind, daß die Verriegelungshebel in der Schließstellung mit ihren Schließarmen die Anschlagkörper hintergreifen und durch Anschläge derselben in ihrer Verriegelungsbewegung so begrenzt sind, daß ihre Betätigungsarme nicht in den Bereich von auf der Innenseite der Gegen-Schranktür angebrachten Montageschienen gelangen und daß die Schließarme der Verriegelungshebel in der Öffnungsstellung aus dem Bereich der Anschlagkörper gedreht und die Betätigungsarme durch Anschläge in ihrer Entriegelungsbewegung so begrenzt sind, daß sie nicht an dem senkrecht zur Gegen-Schranktür stehenden End-Abkantabschnitt der Aufnahme vorstehen.

Bei dieser Ausgestaltung ist sicher vermieden, daß sowohl in der Öffnungsstellung der Verriegelungshebel als auch in der Schließstellung der Verriegelungshebel Teile derselben an der freien vertikalen Kante der Gegen-Schranktür vorstehen können. Durch die Versetzung der Verriegelungshebel in Richtung zum Schrankinnenraum behindert die Gegen-Schranktür selbst das Fassen der Betätigungsarme der Verriegelungshebel nicht, so daß dadurch deren Betätigung wesentlich erleichtert wird. Mit der Abfederung der Lagerung wird ein Festziehen der Gegen-Schranktür am Schrankkorpus erreicht. Die Anschlagkörper sind so am Schrankkorpus angebracht, daß sie die Abkantungen der Aufnahme in der Schließstellung der Gegen-Schranktür aufnehmen und daher die Schließstellung derselben definieren.

Damit die Verriegelungshebel die Anschlagkörper federnd hintergreifen und so die Gegen-Schranktür sicher am Schrankkorpus festlegen, ist nach einer Ausgestaltung vorgesehen, daß die Schließarme der Verriegelungshebel in Schließnasen auslaufen, die um die Wandstärke der U-förmigen Anschlagkörper gegen-über der Innenseite des parallel zur Gegen-Schranktür verlaufenden Abkantabschnittes der Aufnahme zum Schrankinnenraum hin versetzt sind.

Zur Verwendung von einheitlichen Anschlagkörpern für den unteren und den oberen Verriegelungshebel der Gegen-Schranktür wird vorgesehen, daß die beiden Anschlagkörper identisch ausgebildet sind und auf der dem Schrankinnenraum zugekehrten Außenseite zwei Anschläge aufweisen, von denen jeweils der der Montageschiene zugekehrte Anschlag mit dem zugeordneten Verriegelungshebel zusammenarbeitet.

Für die Anbringung der Anschlagkörper an dem Schrankkorpus ist die Ausgestaltung so, daß die offene Vorderseite des Schrankkorpus mittels Rahmenschenkel eines Rahmengestelles abgeschlossen ist und daß die U-förmigen Anschlagkörper Befestigungsschenkel aufweisen, mit denen sie an den einander zugekehrten Profilseiten der horizontal verlaufenden Rahmenschenkeln befestigt sind. Um die Ausrichtung und Positionierung der Anschlagkörper zu erleichtern, ist weiterhin vorgesehen, daß die Profilseiten der Rahmenschenkel Befestigungssystemreihen mit in einheitlicher Teilung eingebrachten Bohrungen und rechteckigen Durchbrüchen versehen sind und daß die Befestigungsschenkel in die Durchbrüche der Befestigungssystemreihen einführbare Positionierungsansätze und Bohrungen Durchbrüche der Befestigungssystemreihen ausrichtbare Befestigungsbohrungen aufweisen.

Das Fassen und die Handhabung der Betätigungsarme der Verriegelungshebel wird nach einer Ausgestaltung dadurch noch erleichtert, daß die Betätigungsarme über Übergangsabschnitte gegenüber der Innenseite des parallel zur Gegen-Schranktür verlaufenden Abkantabschnittes der Aufnahme zum Schrankinnenraum hin versetzt sind. Die Öffnungsstellung der Verriegelungshebel wird dadurch definiert, daß die Betätigungsarme im Bereich ihrer versetzten Enden mit abgekanteten Anschlagflanschen versehen sind.

Sieht eine weitere Ausgestaltung vor, daß die Schließ-Schranktür im Schließbereich mit einem abgekanteten Rand in die Aufnahme der Gegen-Schranktür einführbar ist und daß der auf der Innenseite der Schließ-Schranktür angebrachte Stangenverschluß von der Aufnahme der Gegen-Schranktür aufgenommen ist, dann wird der Stangenverschluß der Schließ-Schranktür zum Schrankinnenraum hin abgedeckt und die Abdichtung des Schließbereiches zwischen Gegen-Schranktür und Schließ-Schranktür ist in die Aufnahme der Gegen-Schranktür verlagert.

Die Erfindung wird anhand eines in den Zeichnungen dargestellten Ausführungsbeispiels näher erläutert. Es zeigen:
- Fig. 1: eine Teilansicht der unten am Schrankkorpus verriegelten Gegen-Schranktür von dem Schrankinnenraum aus gesehen,
- Fig. 2: eine Teilansicht der oben am Schrankkorpus verriegelten Gegen-Schranktür von dem Schrankinnenraum aus gesehen,
- Fig. 3: eine Teilansicht mit dem unteren Anschlagkörper für die abgekantete Aufnahme der Gegen-Schranktür von der Schrankaußen-seite gesehen und
- Fig. 4: eine Teilansicht mit dem oberen Anschlagkörper für die abgekantete Aufnahme der Gegen-Schranktür von der Schrankaußenseite gesehen.

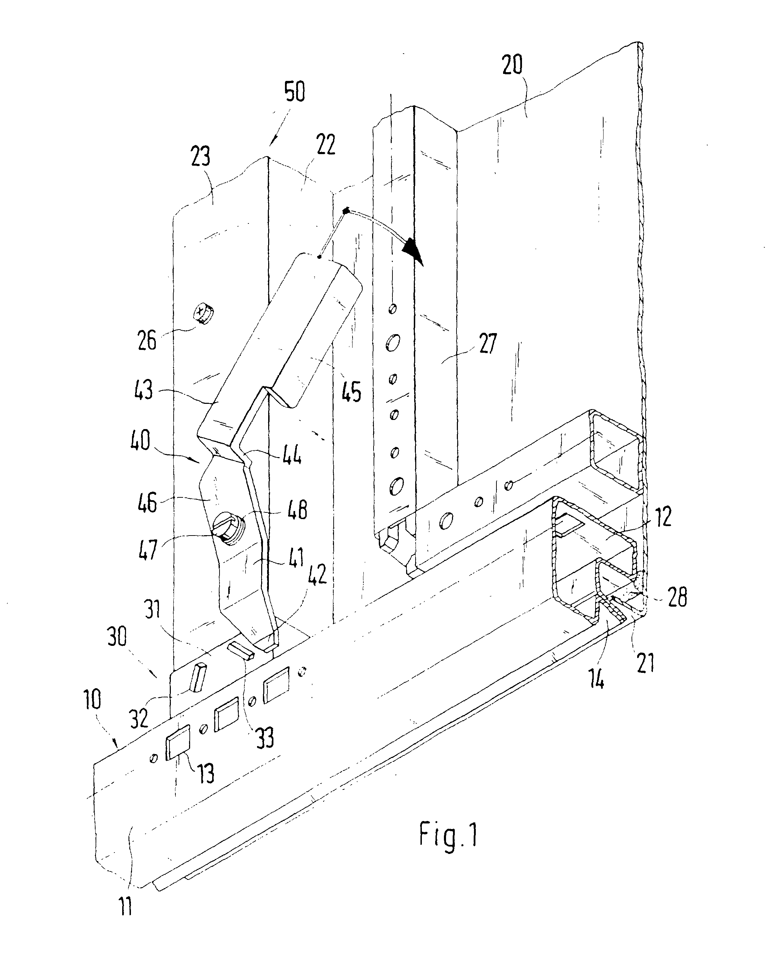

Bei dem gezeigten Ausführungsbeispiel weist der Schrankkorpus ein Rahmengestell 10 auf, das mit Rahmenschenkeln die offene Vorderseite des Schaltschrankes abschließt. In Fig. 1 ist der untere horizontale Rahmenschenkel 11 des Rahmengestelles 10 im Schließbereich der Gegen-Schranktür 20 gezeigt. Die Profilseiten, insbesondere die Profilseite 12 ist mit an sich bekannten Befestigungssystemreihen 13 versehen, die abwechselnd mit Bohrungen und rechteckigen Durchbrüchen in einheitlicher Teilung gebildet sind. Außerdem weist der Rahmenschenkel 11 zur Innenseite der Gegen-Schranktür 20 hin einen Steg 14 und eine Aufnahme für den abgekanteten Rand 21 der Gegen-Schranktür 20 auf. Die Gegen-Schranktür 20 trägt auf ihrer Innenseite ein Dichtelement 28, mit dem zum Rahmenschenkel 11 hin abgedichtet wird. Auf der Innenseite der Gegen-Schranktür 20 ist, wie auch bei der nicht dargestellten Schließ-Schranktür, ein Rahmen aus Montageschienen 27 befestigt.

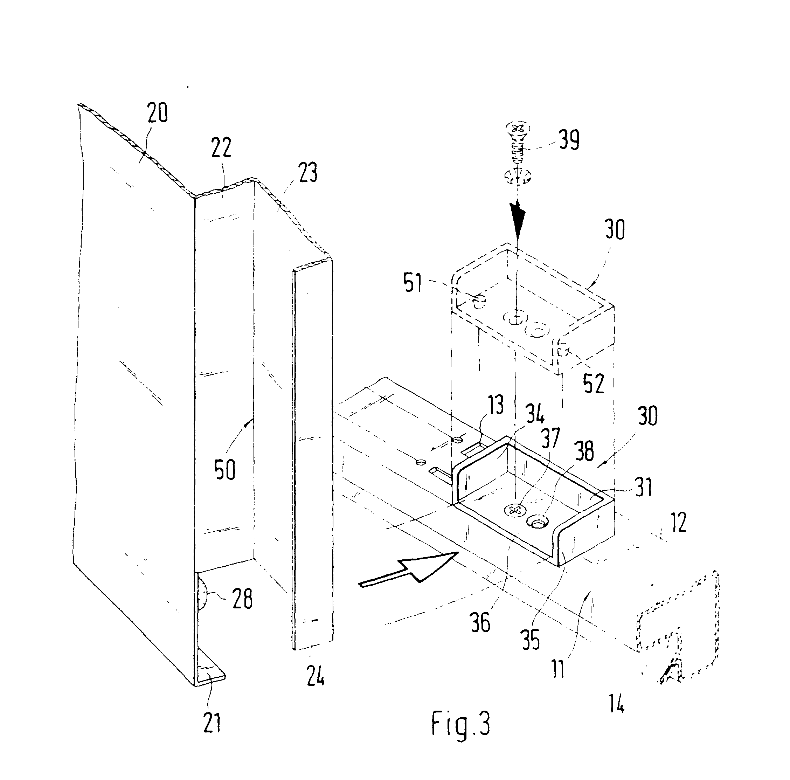

Im Schließbereich der Gegen-Schranktür 20 ist durch dreifaches Abkanten mit den Abkantabschnitten 22, 23 und 24 (Fig. 3) eine nutförmige Aufnahme 50 gebildet, die nach außen offen ist. Auf dem zur Gegen-Schranktür 20 parallelen, zum Schrankinnenraum hin versetzten Abkantabschnitt 23 ist ein Verriegelungshebel 40 drehbar gelagert. Die Lagerung umfaßt eine Lagerschraube 47 und ein Federelement 48, so daß der Verriegelungshebel 40 senkrecht zur Ebene der Gegen-Schranktür 20 Ausgleichsbewegungen ausführen und den Verriegelungshebel 40 in dieser Richtung unter Spannung setzen kann. Der Verriegelungshebel 40 ist mit dem Schließarm 41 und dem Betätigungsarm 43 so abgewinkelt und in seinen Drehbewegungen so begrenzt, daß in der Schließstellung der Betätigungsnungsstellung der Betätigungsarm 43 nicht an dem Abkantab-schnitt 24 (Fig. 3) der Aufnahme 50 der Gegen-Schranktür 20 vorsteht.

Wie Fig. 3 zeigt, ist auf der oberen horizontalen Profilseite 12 des Rahmenschenkels 11 ein Anschlagkörper 30 befestigt, der mit den Schenkeln 31, 34 und 35 einen U-förmigen Anschlag bildet und gleichzeitig eine Gegenaufnahme für die Aufnahme 50 der Gegen-Schranktür 20 bildet. Ist die Aufnahme 50 in den Anschlagkörper 30 eingeführt, dann steht der Schenkel 31 des Anschlagkörpers 30 mit seiner Wandstärke über dem Abkantabschnitt 23 vor, wie der Fig. 1 zu entnehmen ist. Der Schließabschnitt 41 des Verriegelungshebels 40 läuft in eine Schließnase 42 aus, die so gegenüber dem Abkantabschnitt 23 versetzt ist, daß sie den Schenkel 31 des Anschlagkörpers 30 hintergreifen kann und unter Federspannung in dieser Verriegelungsstellung gehalten wird. Die Verriegelungsbewegung wird durch den Anschlag 33 auf der freien Außenseite des Schenkels 31 begrenzt.

Der Betätigungsarm 43 des Verriegelungshebels 40 ist über Übergangsabschnitte 44 und 46 so gegenüber dem Abkantabschnitt 23 versetzt, daß er ohne Behinderung durch die Aufnahme 50 in die Öffnungsstellung verschwenkt werden kann. Diese Verstellung des Verriegelungshebels 40 wird durch einen Anschlag 26 auf dem Abkantabschnitt 23 begrenzt und zwar durch Anschlag eines Anschlagflansches 45 der im Endbereich des Betätigungsarmes 43 abgekantet ist. Der Betätigungsarm kann mit dieser Ausgestaltung leicht gefaßt und bedient werden. Seine beiden Endstellungen sind eindeutig definiert, so daß die Montagemöglichkeiten auf der Montageschiene 27 nicht beeinträchtigt ist und daß auf keinen Fall Teile des Verriegelungshebels 40 an dem Abkantabschnitt 24 der Gegen-Schranktür 20 vorstehen können.

Wie Fig. 3 erkennen läßt, sind die Abkantabschnitte 22, 23 und 24 so gegenüber dem Türblatt mit dem abgekanteten Rand 21 verkürzt, daß sie in den U-förmigen Anschlagkörper 30 eingeführt werden können, während der Rand 21 der Gegen-Schranktür 20 in die über dem Steg 14 gebildete Aufnahme des Rahmenschenkels 11 eingeführt wird.

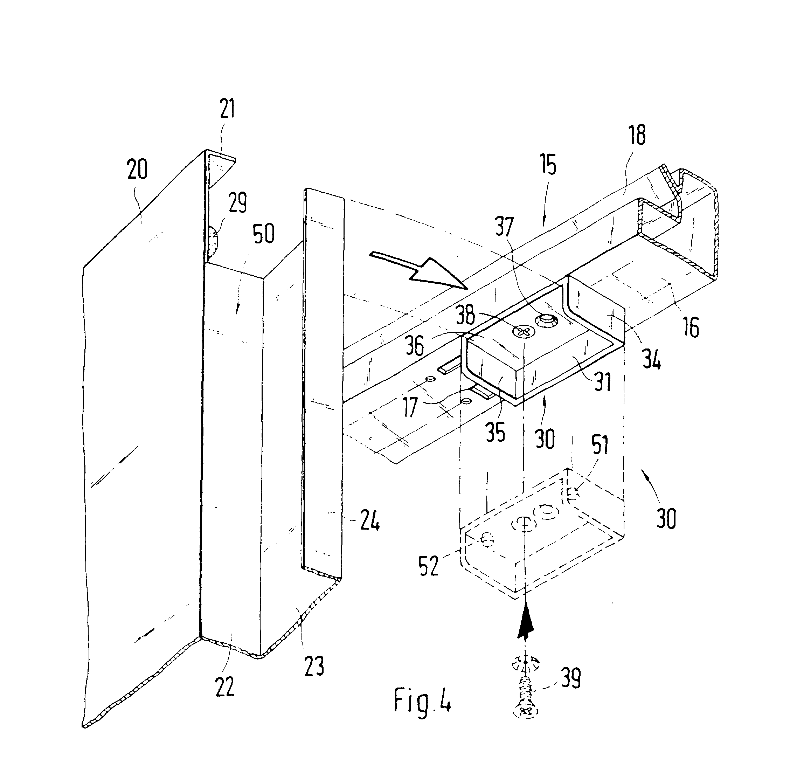

Der U-förmige Anschlagkörper 30 mit den Schenkeln 31, 34 und 35 ist einseitig mit einem Befestigungsschenkel 36 verschlossen, um auf einfache Weise mit dem Rahmenschenkel 11 verbunden werden zu können. Dieser Befestigungsschenkel 36 trägt auf seiner Außenseite zwei Positionieransätze 51 und 52, mit denen er unter Belegung von Durchbrüchen der Befestigungssystemreihe 13 auf dem Rahmenschenkel 11 positioniert werden kann. Außerdem ist der Befestigungsschenkel 36 mit zwei beabstandeten Befestigungsbohrungen 37 und 38 versehen, die auf eine Bohrung der Befestigungssystemreihe 13 ausrichtbar sind. Sind die Anschlagkörper 30 identisch ausgebildet, dann wird, wie die Fig. 3 und 4 erkennen lassen, unten die Befestigungsbohrung 37 und oben die Befestigungsbohrung 38 mit der Befestigungsschraube 39 belegt.

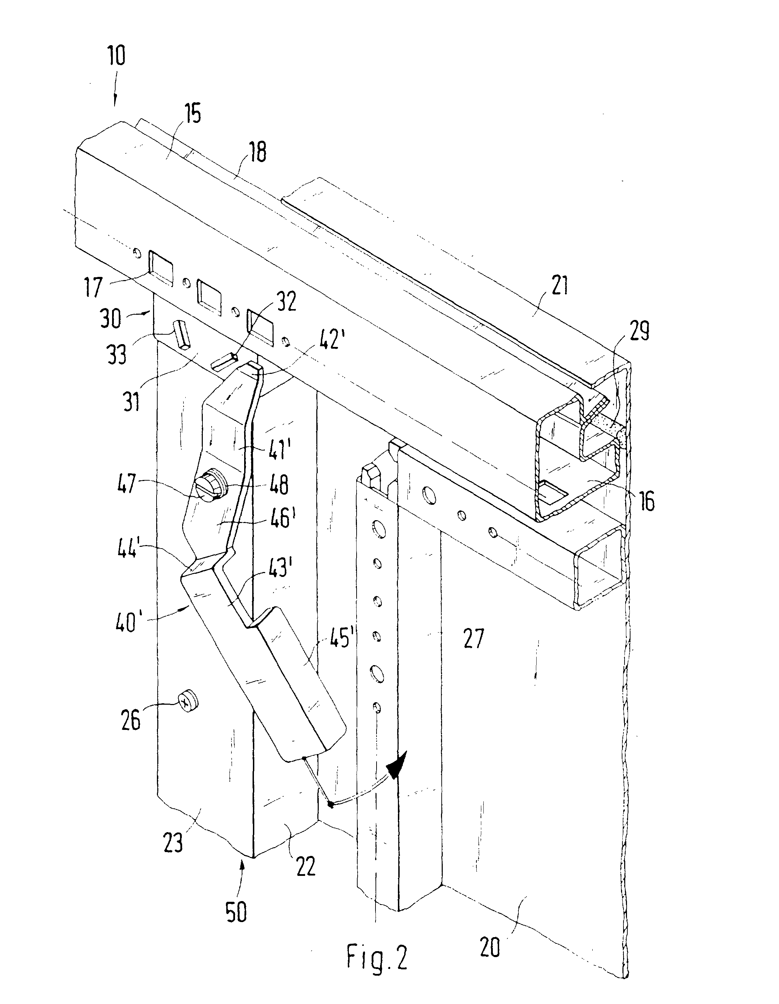

Wie die Fig. 2 zeigt, ist der obere Verriegelungshebel 40' am oberen Ende der Gegen-Schranktür 20 spiegelbildlich ausgebildet und abgekantet, wobei die mit 41', 42', 43', 44', 45' und 46' bezeichneten Teile des Verriegelungshebels 40 dieselben Funktionen übernehmen, wie die mit 41, 42, 43, 44, 45 und 46 bezeichneten Teile des unteren Verriegelungshebels 40. Die Drehlagerung und Abfederung des Verriegelungshebels 40' übernehmen wieder eine Lagerschraube 47 und ein Federelement 48. Der Abkantabschnitt 23 trägt einen Anschlag 26, der die Öffnungsbewegung des Verriegelungshebels 40' begrenzt und in der Verriegelungsstellung schlägt die Schließnase 42' an dem Anschlag 33 des Anschlagkörpers 30 an.

Wie die Fig. 4 erkennen läßt, sind die Abkantabschnitte 22, 23 und 24 der Aufnahme 50 auch oben gegenüber dem Türblatt mit dem Rand 21 entsprechend verkürzt, um in den nach unten offenen Anschlagkörper 30 eingeführt werden zu können. Der Anschlagkörper 30 ist unter Verwendung der Befestigungssystemreihe 17 auf der Profilseite 16 des oberen, horizontalen Rahmenschenkels 15 befestigt, die der Profilseite 12 des unteren, horizontalen Rahmenschenkels 11 zugekehrt ist. Der Rand 21 ist in die unter dem Steg 18 des Rahmenschenkels 15 angeordnete Aufnahme einführbar, wobei das Dichtelement 29 die Abdichtung zwischen Gegen-Schranktür 20 und Rahmenschenkel 15 übernimmt.

Die Aufnahme 50 der Gegen-Schranktür 20 wird von der Schließ-Schranktür überdeckt, wobei der abgekantete Rand in diese Aufnahme eingeführt und zur Abdichtung der beiden Schranktüren im Schließbereich ausgenützt werden kann. Außerdem wird der im Anschluß an den Rand der Schließ-Schranktür auf der Innenseite derselben angeordnete Stangenverschluß oder eine andere Verschlußeinrichtung von der Aufnahme der Gegen-Schranktür 20 aufgenommen und zum Schrankinnenraum hin abgedeckt.

## Patentansprüche

1. Schaltschrank mit einem Schrankkorpus, dessen offene Vorderseite mittels einer Gegen-Schranktür (20) und einer eine Verschlußeinrichtung tragenden Schließ-Schranktür nacheinander verschließbar ist, wobei die GegenSchranktür (20) unten und oben mittels eines zweiarmigen Verriegelungshebels (40, 40') am Schrankkorpus und die Schließ-Schranktür mittels eines Stangenverschlusses am Schrankkorpus festlegbar sind und wobei die Schließ-Schranktür im Schließbereich die Gegen-Schranktür teilweise überlappt,
**dadurch gekennzeichnet,**
**daß** die Gegen-Schranktür (20) im Schließbereich dreifach abgekantet ist und eine nach außen offene nutartige Aufnahme (50) bildet,
**daß** die Verriegelungshebel (40, 40') spiegelbildlich ausgebildet und auf der dem Schrankinnenraum zugekehrten Innenseite des parallel zur Ebene der Gegen-Schranktür (20) ausgerichteten Abkantabschnittes (23) der Aufnahme (50) drehbar und abgefedert gelagert sind,
**daß** im Schließbereich unten und oben U-förmig abstehende, nach außen offene Anschlagkörper (30) angebracht sind, in die die Abkantabschnitte (22, 23, 24) der Gegen-Schranktür (20) einführbar sind,
**daß** die Verriegelungshebel (40, 40') in der Schließstellung mit ihren Schließarmen (41, 41') die Anschlagkörper (30) hintergreifen und durch Anschläge (32, 33) derselben in ihrer Verriegelungsbewegung so begrenzt sind, daß ihre Betätigungsarme (43, 43') nicht in den Bereich von auf der Innenseite der Gegen-Schranktür (20) angebrachten Montageschienen (27) gelangen und
**daß** die Schließarme (41, 41') der Verriegelungshebel (40, 40') in der Öffnungsstellung aus dem Bereich der Anschlagkörper (30) gedreht und die Betätigungsarme (43, 43') durch Anschläge (26) in ihrer Entriegelungsbewegung so begrenzt sind, daß sie nicht an dem senkrecht zur Gegen-Schranktür (20) stehenden End-Abkantabschnitt (24) der Aufnahme (50) vorstehen.

2. Schaltschrank nach Anspruch 1,
**dadurch gekennzeichnet,**
**daß** die Schließarme (41, 41') der Verriegelungshebel (40, 40') in Schließnasen (42, 42') auslaufen, die um die Wandstärke der U-förmigen Anschlagkörper (30) gegenüber der Innenseite des parallel zur Gegen-Schranktür (20) verlaufenden Abkantabschnittes (23) der Aufnahme (50) zum Schrankinnenraum hin versetzt sind.

3. Schaltschrank nach Anspruch 1 oder 2,
**dadurch gekennzeichnet,**
**daß** die beiden Anschlagkörper (30) identisch ausgebildet sind und auf der dem Schrankinnenraum zugekehrten Außenseite zwei Anschläge (32, 33) aufweisen, von denen jeweils der der Montageschiene (27) zugekehrte Anschlag (33 bzw. 32) mit dem zugeordneten Verriegelungshebel (40 bzw. 40') zusammenarbeitet.

4. Schaltschrank nach einem der Ansprüche 1 bis 3,
**dadurch gekennzeichnet,**
**daß** die offene Vorderseite des Schrankkorpus mittels Rahmenschenkel (11, 15) eines Rahmengestelles (10) abgeschlossen ist und
**daß** die U-förmigen Anschlagkörper (30) Befestigungsschenkel (36) aufweisen, mit denen sie an den einander zugekehrten Profilseiten (12, 16) der horizontal verlaufenden Rahmenschenkeln (11, 15) befestigt sind.

5. Schaltschrank nach Anspruch 4,
**dadurch gekennzeichnet,**
**daß** die Profilseiten (12, 16) der Rahmenschenkel (11, 15) Befestigungssystemreihen (13, 17) mit in einheitlicher Teilung eingebrachten Bohrungen und rechteckigen Durchbrüchen versehen sind und
**daß** die Befestigungsschenkel (36) in die Durchbrüche der Befestigungssystemreihen (13, 17) einführbare Positionierungsansätze (51, 52) und auf die Bohrungen der Befestigungssystemreihen (13, 17) ausrichtbare Befestigungsbohrungen (37, 38) aufweisen.

6. Schaltschrank nach einem der Ansprüche 1 bis 5,
**dadurch gekennzeichnet,**
**daß** die Betätigungsarme (43, 43') über Übergangsabschnitte (44 und 46 bzw. 44' und 46') gegenüber der Innenseite des parallel zur Gegen-Schranktür (20) verlaufenden Abkantabschnittes der Aufnahme (50) zum Schrankinnenraum hin versetzt sind.

7. Schaltschrank nach Anspruch 6,
**dadurch gekennzeichnet,**
**daß** die Betätigungsarme (43, 43') im Bereich ihrer versetzten Enden mit abgekanteten Anschlagflanschen (45, 45') versehen sind.

8. Schaltschrank nach einem der Ansprüche 1 bis 7,
**dadurch gekennzeichnet,**
**daß** die Schließ-Schranktür im Schließbereich mit einem abgekanteten Rand in die Aufnahme (50) der Gegen-Schranktür (20) einführbar ist und
**daß** der auf der Innenseite der Schließ-Schranktür angebrachte Stangenverschluß von der Aufnahme (50) der Gegen-Schranktür (20) aufgenommen ist.

## Claims

1. Switch cabinet having a basic cabinet structure, of which the open front side can be closed in succession by an inner cabinet door (20) and a closing cabinet door which bears a closure device, it being possible for the inner cabinet door (20) to be secured at the bottom and top of the basic cabinet structure by means of a two-armed locking lever (40, 40') and for the closing cabinet door to be secured on the basic cabinet structure by means of a rod closure, and the closing cabinet door partially overlapping the inner cabinet door in the locking region, **characterized in that** the inner cabinet door (20) is angled three times in the locking region and forms a groove-like mount (50) which is open in the outward direction, **in that** the locking levers (40, 40') are of mirror-inverted design and are mounted in a rotatable and resilient manner on the inside of the angled portion (23) of the mount (50) which is oriented parallel to the plane of the inner cabinet door (20), the inside of said angled portion being directed towards the cabinet interior, **in that** fitted at the bottom and top of the locking region are stop bodies (30) which project in a U-shaped manner, are open in the outward direction and into which the angled portions (22, 23, 24) of the inner cabinet door (20) can be introduced, **in that** the locking levers (40, 40'), in the locking position, engage behind the stop bodies (30) by way of their locking arms (41, 41') and have their locking movement limited by stops (32, 33) of the stop bodies such that their actuating arms (43, 43') do not pass into the region of installation rails (27) fitted on the inside of the inner cabinet door (20), and **in that** the locking arms (41, 41') of the locking levers (40, 40'), in the open position, have been rotated out of the region of the stop bodies (30) and the actuating arms (43, 43') have their unlocking movement limited by stops (26) such that they do not project on the end angled portion (24) of the mount (50), which is located perpendicularly to the inner cabinet door (20).

2. Switch cabinet according to Claim 1, **characterized in that** the locking arms (41, 41') of the locking levers (40, 40') terminate in locking noses (42, 42') which are offset in the direction of the cabinet interior, by the wall thickness of the U-shaped stop bodies (30), in relation to the inside of the angled portion (23) of the mount (50), which runs parallel to the inner cabinet door (20).

3. Switch cabinet according to Claim 1 or 2, **characterized in that** the two stop bodies (30) are of identical design and on the outside, which is directed towards the cabinet interior, have two stops (32, 33), of which in each case that stop (33 or 32) which is directed towards the installation rail (27) interacts with the associated locking lever (40 or 40', respectively).

4. Switch cabinet according to one of Claims 1 to 3, **characterized in that** the open front side of the basic cabinet structure is terminated by means of frame legs (11, 15) of a framework (10), and **in that** the U-shaped stop bodies (30) have fastening legs (36), by means of which they are fastened on the mutually facing profile sides (12, 16) of the horizontally running frame legs (11, 15).

5. Switch cabinet according to Claim 4, **characterized in that** the profile sides (12, 16) of the frame legs (11, 15) are provided with fastening-system rows (13, 17) with rectangular through-passages and bores made at uniform intervals, and **in that** the fastening legs (36) have positioning extensions (51, 52), which can be introduced into the through-passages of the fastening-system rows (13, 17), and fastening bores (37, 38), which can be aligned with the bores of the fastening-system rows (13, 17).

6. Switch cabinet according to one of Claims 1 to 5 , **characterized in that** the actuating arms (43, 43') are offset, via transition portions (44, 46 and 44', 46', respectively), in the direction of the cabinet interior in relation to the inside of that angled portion of the mount (50) which runs parallel to the inner cabinet door (20).

7. Switch cabinet according to Claim 6, **characterized in that** the actuating arms (43, 43') are provided with angled stop flanges (45, 45') in the region of their offset ends.

8. Switch cabinet according to one of Claims 1 to 7, **characterized in that** the closing cabinet door, in the locking region, can be introduced into the mount (50) of the inner cabinet door (20) by way of an angled border, and **in that** the rod closure, which is fitted on the inside of the closing cabinet door, is accommodated by the mount (50) of the inner cabinet door (20).

## Revendications

1. Armoire de commande avec un corps d'armoire, dont la face avant ouverte peut être fermée successivement au moyen d'une contre-porte d'armoire (20) et d'une porte de fermeture d'armoire portant un dispositif de fermeture, la contre-porte d'armoire (20) pouvant être fixée en haut et en bas au moyen d'un levier de verrouillage (40, 40') à deux bras sur le corps d'armoire et la porte de fermeture d'armoire au moyen d'un verrou à tige sur le corps d'armoire et la porte de fermeture d'armoire recouvrant partiellement la contre-porte d'armoire dans la zone de fermeture,
**caractérisée en ce que**
la contre-porte d'armoire (20) est repliée trois fois dans la zone de fermeture et forme un logement (50) en forme de rainure ouvert vers l'extérieur,
les leviers de verrouillage (40, 40') sont conformés de manière symétrique et montés de manière pivotante et suspendue sur ressort sur la face intérieure tournée vers l'intérieur de l'armoire du segment replié (23) du logement (50) orienté parallèlement au plan de la contre-porte d'armoire (20),
des corps de butée (30) en forme de U espacés ouverts vers l'extérieur, dans lesquels les segments repliés (22, 23, 24) de la contre-porte d'armoire (20) peuvent être insérés, sont montés en haut et en bas dans la zone de fermeture,
en position de fermeture, les leviers de verrouillage (40, 40') s'engagent avec leurs bras de fermeture (41, 41') au dos des corps de butée (30) et sont limités dans leur mouvement de verrouillage par les butées (32, 33) de ceux-ci, de telle sorte que leurs bras de manoeuvre (43, 43') ne parviennent pas dans la zone de barres de montage (27) montées sur la face intérieure de la contre-porte d'armoire (20) et
en position d'ouverture, les bras de fermeture (41, 41') des leviers de verrouillage (40, 40') pivotent hors de la zone des corps de butée (30) et les bras de manoeuvre (43, 43') sont limités par des butées (26) dans leur mouvement de déverrouillage, de telle sorte qu'ils ne dépassent pas du segment replié terminal (24) du logement (50) perpendiculaire à la contre-porte d'armoire (20).

2. Armoire de commande selon la revendication 1,
**caractérisée en ce que**
les bras de fermeture (41, 41') des leviers de verrouillage (40, 40') se prolongent par des becs de fermeture (42, 42') qui sont décalés de l'épaisseur de la paroi des corps de butée en forme de U (30) vers l'intérieur de l'armoire par rapport à la face intérieure du segment replié (23) du logement (50) s'étendant parallèlement à la contre-porte d'armoire (20).

3. Armoire de commande selon la revendication 1 ou 2,
**caractérisée en ce que**
les deux corps de butée (30) sont conformés de manière identique et présentent sur la face extérieure tournée vers l'intérieur de l'armoire deux butées (32, 33), dont la butée (respectivement 33 et 32) tournée vers la barre de montage (27) coopère à chaque fois avec le levier de verrouillage (respectivement 40 et 40') associé.

4. Armoire de commande selon l'une quelconque des revendications 1 à 3,
**caractérisée en ce que**
la face avant ouverte du corps d'armoire est bordée par les ailes (11, 15) d'un châssis (10) et
les corps de butée en forme de U (30) présentent des ailes de fixation (36) avec lesquelles ils se fixent sur les côtés profilés (12, 16) tournés l'un vers l'autre des ailes de châssis (11, 15) s'étendant horizontalement.

5. Armoire de commande selon la revendication 4,
**caractérisée en ce que**
les côtés profilés (12, 16) des ailes de châssis (11, 15) sont dotées de séries de systèmes de fixation (13, 17) avec des trous et des échancrures rectangulaires répartis régulièrement et
les ailes de fixation (36) présentent des embouts de positionnement (51, 52) pouvant s'insérer dans les échancrures des séries de systèmes de fixation (13, 17) et des trous de fixation (37, 38) pouvant s'aligner sur les trous des séries de systèmes de fixation (13, 17) .

6. Armoire de commande selon l'une quelconque des revendications 1 à 5,
**caractérisée en ce que**
les bras de manoeuvre (43, 43') sont décalés par des segments de transition (44 et 46 respectivement 44' et 46') vers l'intérieur de l'armoire par rapport à la face intérieure du segment replié du logement (50) s'étendant parallèlement à la contre-porte d'armoire (20) .

7. Armoire de commande selon la revendication 6,
**caractérisée en ce que**
les bras de manoeuvre (43, 43') sont dotés de rebords de butée (45, 45') repliés dans la zone de leurs extrémités décalées.

8. Armoire de commande selon l'une quelconque des revendications 1 à 7,
**caractérisée en ce que**
dans la zone de fermeture, la porte de fermeture d'armoire peut s'insérer avec un bord replié dans le logement (50) de la contre-porte d'armoire (20) et le verrou à tige monté sur la face intérieure de la porte de fermeture d'armoire est reçu dans le logement (50) de la contre-porte d'armoire (20).
